# EUROPEAN PATENT SPECIFICATION

(11) **EP 1 385 044 B1**
(45) Date of publication and mention of the grant of the patent: **06.09.2006**
(21) Application number: 03254628.5
(22) Date of filing: 23.07.2003
(51) Int. Cl.: G02F 1/137, G09G 3/36

(54) **High contrast black-and-white cholesteric liquid crystal display**
Cholesterische Schwarz-Weiss-Flüssigkristallanzeige mit hohem Kontrast
Dispositif d'affichage noir et blanc à cristaux liquides choléstériques ayant un contraste élevé

(30) Priority: 26.07.2002 GB 0217384; 01.08.2002 GB 0217917
(43) Date of publication of application: 28.01.2004
(73) Proprietor: VARINTELLIGENT (BVI) LIMITED, Tortola, British Virgin Islands (VG); JOHNSON, Terence Leslie, London EC4A 1BZ (GB)
(72) Inventor: Tsang, Fu On, Tseung Kwan O Hong Kong (CN); Lee, Richard C. H., Tseung Kwan O Hong Kong (CN)
(74) Representative: Johnson, Terence Leslie

(56) References cited:
- US-A- 5 796 454
- US-B1- 6 344 887

## Description

This invention describes a new chiral nematic display configuration to achieve high contrast black-and-white display.

Classical liquid crystal displays have been widely used in various applications. Severe viewing angle dependence and high power consumption in backlight are major drawbacks for some applications. There has accordingly been active research in chiral nematic liquid crystals in the last few decades. One of the main features in chiral nematic displays is that the bright state and the dark state are bistable, i.e. stable even when the voltage is not connected. This bistability nature results in image retention and flicker-free viewing. Moreover, driving methods and electro-optic response of chiral nematic displays are different from classical liquid crystal displays and result in no limitation on the maximum multiplexing of the display.

There are in such displays two stable states, namely a planar state and a focal conic state. In the planar state, liquid crystal molecules are aligned in a helix form where the axis of the helix is perpendicular to the display plane. Circular polarized light of wavelength matching the pitch and handedness of the helix is reflected by Bragg reflection. This pitch of the helix structure and hence peak reflection wavelength can be adjusted to a visible range or invisible range of the spectrum. The remaining spectrum passes through the chiral nematic and is unaffected. Moreover, for opposite circular polarization, the entire spectrum passes through the chiral nematic and is not affected. On the other hand, in the focal conic state, the liquid crystals form micro-domains and each domain is a small helix structure and the helical axes are highly tilted from the display normal, more or less parallel to the plane of the display. Light is scattered (backwardly, sidely and mainly forwardly) at the domain boundaries where there is an abrupt change in the optical refractive index. The focal conic state is transparent with haze, and the polarization of transmitted light is destroyed.

US 6344887 and US 5796454 describe liquid crystal display devices. The present invention is characterised over US 6344887 which describes a full spectrum black-and-white reflective chiral-nematic or cholesteric display device. US5796454 discloses a black-and-white transmissive chiral nematic display device. US5796454 is transmissive and thus an optical reflector is not present.

In many applications, very high information content displays with good contrast and low power consumption are required. Chiral nematic displays have particular advantages of availability in very high resolution, image retention and very low power consumption, high contrast and very wide viewing angles.

According to the invention there is provided a black-and-white reflective chiral nematic display device, comprising a display panel with a chiral nematic liquid crystal material arranged between two transparent substrates, each with a conductive electrode attached thereon, the chiral nematic liquid crystal material exhibiting a controllable planar texture structure and a controllable focal conic texture structure, said display device further comprising two elliptical polarisers and an optical reflector, said display panel being arranged between said elliptical polarisers, characterised in that both elliptical polarisers are arranged to exhibit a handedness opposite to the handedness of the chiral nematic liquid crystal material.

There are disclosed display configurations and, using the invention, bistable chiral nematic display configurations can be utilized. Each disclosed display has a full spectrum white with high contrast. They have very low power consumption and any driving schemes suitable for driving chiral nematic displays to planar and focal conic states can be applied to the display.

Chiral nematic displays embodying the invention are hereinafter described, by way of example, with reference to the accompanying drawings.
Figure 1 depicts an optical configuration of a black-and-white chiral nematic display not according to the invention.
Figure 2 depicts the optical configuration of the black-and-white chiral nematic display according to the invention;
Figure 3 shows the reflection and transmission properties at the planar state where the incoming light is of the same elliptical polarization as the chiral nematic material;
Figure 4 shows the reflection and transmission properties at the planar state where the incoming light is of opposite elliptical polarization as the chiral nematic material;
Figure 5 shows the reflection and transmission properties of the chiral nematic material at the focal conic state;
Figure 6 shows the light paths in the optical configuration of a black-and-white chiral nematic display not according to the invention;
Figure 7 shows the light paths in the optical configuration of a black-and-white chiral nematic display according to the invention.

Referring to the drawings, in which like parts are indicated by like numbers. In general, chiral nematic displays 1 are disclosed comprising essentially laminates of, as viewed from in front or the top in the drawings, a linear polarizer 2, a quarter wave retardation film 3, front and rear transparent substrates 4, 5 with conductive electrodes and a chiral nematic liquid crystal 6 sandwiched therebetween, a quarter wave retardation film 7, a linear polarizer 8 and a reflector 9.

The linear polarizer 2 and quarter wave retardation film 3 form an opposite circular polarization to the chiral nematic display.

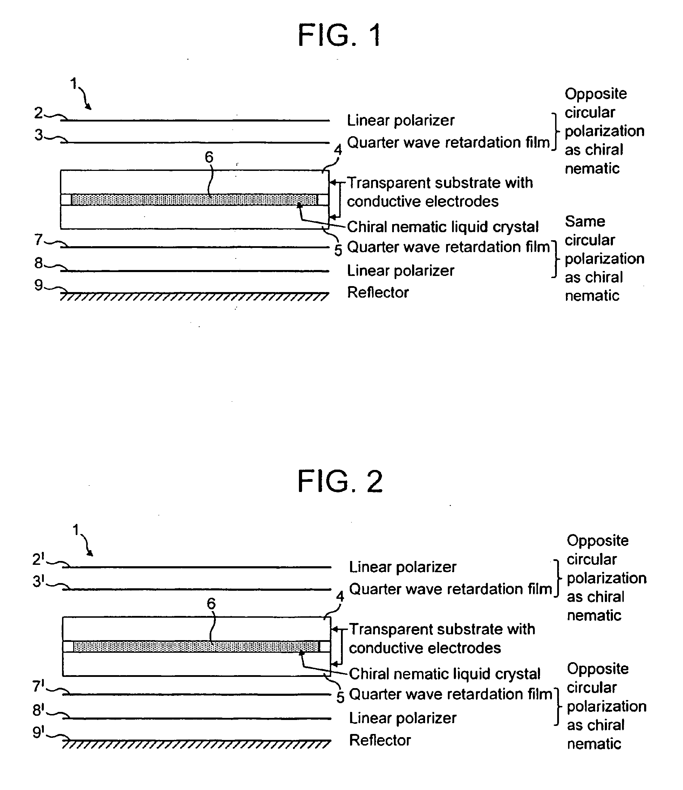

Referring now to the optical mode configuration not according to the invention as illustrated in Figure 1, the structures of the black-and-white chiral nematic display not according to the invention is by adding two elliptical polarizers 2, 3 and 7, 8 of opposite senses (left hand as well as right hand) of handedness and a reflector to the chiral nematic display 6. The elliptical (in particular, circular) polarizers are selected so as to match the polarization type (i.e. circular) of the chiral nematic reflection and transmission. A simple way of making a circular polarizer is to laminate a linear polarizer 2, 8 with a quarter wave retardation film 3, 7 at 45°. The quarter wave retardation film is preferably of wideband. A wideband retardation film is understood to mean a film which offers uniform retardation (1/4λ) at any wavelength of the visible spectrum. The angle between the linear polarizer and the quarter wave retardation film is adjusted appropriately to give either a left band circular polarizer or a right hand circular polarizer. The chiral nematic display 6 consists of a chiral nematic liquid crystal material layer of any reflection spectrum and any sense (hand) of circular polarization, sandwiched between the two transparent substrates 4, 5 each with transparent conductive electrodes. The transparent substrates 4, 5 can be of any transparent material not altering the polarization when light is passing through. Examples of such transparent substrates are glass or plastic. The transparent conductive electrodes can be indium tin oxide or tin oxide, for example. The chiral nematic liquid crystal 6 material possesses stable planar state and focal conic state. The chiral nematic display is then sandwiched between the opposite hand elliptical polarizers 2, 3 and 7, 8 where the front elliptical polarizer is of opposite sense to the chiral nematic liquid crystal material and the rear elliptical polarizer is of the same sense as the chiral nematic liquid crystal material. Moreover, the front and rear quarter wave retardation films 3, 7 are facing the respective transparent substrates 4, 5 of the chiral nematic display 6 so that the light entering into the intermediate chiral nematic material from above or below in the entire optical path is elliptically polarized. Below the linear polarizer of the rear elliptical polarizer, a reflector is placed. This is the structural configuration of the black-and-white chiral nematic display not according to the invention.

In the white "ON" state, the chiral nematic liquid crystal 6 materials are in a focal conic state. When unpolarized light passes through the front elliptical polarizer 2, 3, half of the light intensity is absorbed and the remaining carries on into the chiral nematic materials. This light is depolarised by the focal conic structure and becomes linearly polarized with another loss in 50% intensity after passing the rear elliptical polarizer 7, 8. This linear polarized light is reflected by the reflector 9 and goes through the rear elliptical polarizer 7, 8 again. After passing through the chiral nematic material 6 again, the light becomes unpolarized. This unpolarized light becomes polarized again after passing through the front elliptical polarizer 2, 3 and the intensity is further reduced by half. The optical path polarized/depolarised/polarized/reflected/depolarised/polarized is independent of wavelength and if the incoming light is white, the outgoing light to the viewer is also white. The intensity at the white "ON" state is 12.5% as the incoming light.

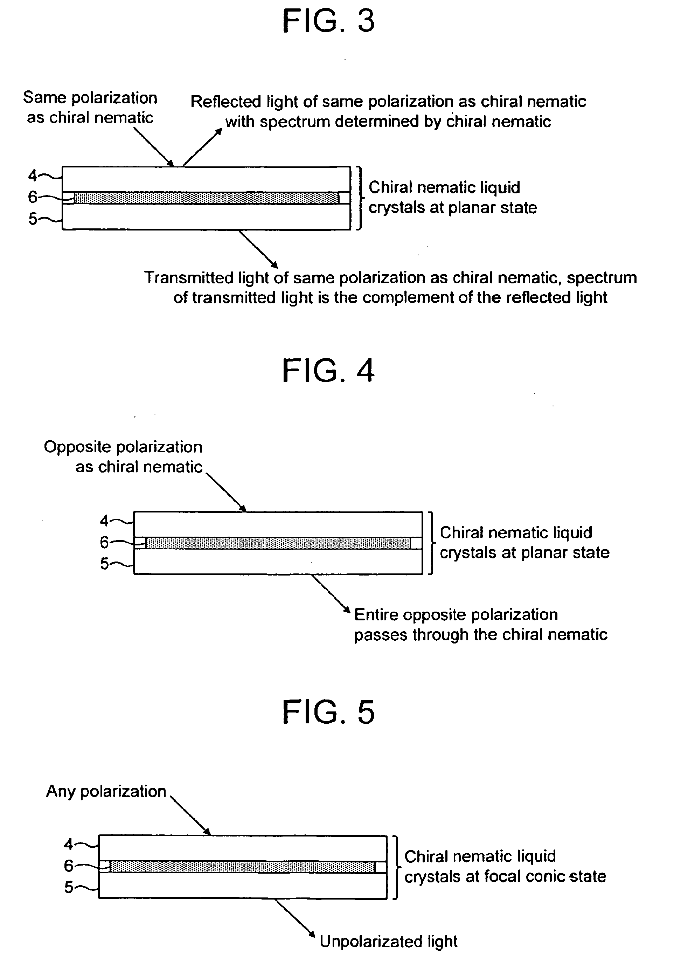

In the dark "OFF" state, the chiral nematic liquid crystal materials are in a planar state. Similar to the "ON" case, the light entering into the chiral nematic material 6 is circularly polarized (opposite sense as the chiral nematic material) with 50% reduction in intensity after passing through the front polarizer. As shown in Figure 4, this polarized light is unaltered and completely passes through the chiral nematic materials. Then it is totally absorbed by the rear elliptical polarizer (of opposite polarity as the front polarizer). There is no light entering to the mirror and a dark state results. Zero light intensity will be viewed by the viewer.

The optical mode configuration according to the invention is illustrated in Figure 2. The structure of the second black-and-white chiral nematic display according to the invention is by adding two elliptical polarizers 2', 3' and 7', 8' of same sense of handedness and a reflector 9' to the chiral nematic display 4, 5, 6. The sense of the elliptical polarizers 2', 3' and 7', 8' is opposite to the chiral nematic material 6. The elliptical (to be more precise, circular) polarizers are selected so as to match the polarization type (i.e. circular) of the chiral nematic reflection and transmission. A way of making circular polarizer is to laminate a linear polarizer 2', 7' with a quarter wave retardation film 3', 8' at 45°. The quarter wave retardation film is preferably of wideband. The angle between the linear polarizer and the quarter wave retardation film is adjusted appropriately to give either a left hand circular polarizer or a right hand circular polarizer. The chiral nematic display 6 consists of a chiral nematic liquid crystal material layer, of any reflection spectrum and any handedness, sandwiched between two transparent substrates with transparent conductive electrodes. The transparent substrates can be any transparent material not altering the polarization when light is passing through. Examples of such transparent materials can be glass or plastic. The transparent conductive electrodes can be indium tin oxide or tin oxide for example. The chiral nematic liquid crystal material possesses a stable planar state and a focal conic state. The chiral nematic display 6 is then sandwiched between the elliptical polarizers (of opposite sense as the chiral nematic material). Moreover, the front and rear quarter wave retardation films 3', 7' are facing the transparent substrate of the chiral nematic display so that any light entering into the intermediate chiral nematic material from above and below in the entire optical path is elliptically polarized. Below the linear polarizer of the rear elliptical polarizer, a reflector 9' is placed. This is the structural configuration of the invented black-and-white chiral nematic display.

In the white "ON" state, the chiral nematic liquid crystal materials are in a planar state. When unpolarized light passes through the front polarizer, half of the intensity is absorbed and the remaining circular polarization goes into the chiral nematic materials. This light (of opposite sense as the chiral nematic material) passes through the chiral nematic material, the rear polarizer, is reflected by the reflector and re-enters the rear polarizer, the chiral nematic material and finally the front polarizer without any change in the polarization and intensity. This outgoing light is viewed by the viewer. The entire light path is independent of wavelength and the reflected light is white coloured with light intensity 50% of the original incoming light.

In the dark "OFF" state, the chiral nematic liquid crystal materials are in a focal conic state. Similar to the "ON" case, the light entering into the chiral nematic material is circularly polarized. This polarized light is depolarised by the focal conic chiral nematic material. The depolarised light passes through the rear polarizer, becomes polarized and its intensity is halved. This polarized light is then reflected by the mirror 9' and re-enters the rear polarizer without any change of polarization and intensity. The light will pass through the focal conic chiral nematic material and is depolarised again. This depolarised light passes through the front polarizer again, becomes polarized and its intensity is halved. The outgoing (polarized) light, viewed by the viewer, is white coloured with intensity 12.5%.

It will be understood from the foregoing that in the comparative example of Figure 1, an optical configuration not according to the invention is described. The black-and-white chiral nematic display configuration is made up by a chiral nematic display of any reflection spectrum and any elliptical polarization. The chiral nematic material selectively reflects and transmits light of certain elliptical (in particular, circular) polarizations. The angle between the front linear polarizer and the front quarter wave retardation film is optimised so that linear polarized light is converted into elliptically polarized light corresponding to that of the chiral nematic materials. The same is also achieved for the rear linear polarizer and the rear quarter wave retardation film. The front elliptically polarized light is adjusted to be of opposite polarity to that of the chiral nematic material. The angle between the rear linear polarizer and rear quarter wave retardation film is selected so that it is of the same polarity as the chiral nematic material.

The optical bright "ON" state of the configuration given by Figure 1 is when the chiral nematic material is in the focal conic state and the optical dark "OFF" state is when the chiral nematic material is in the planar state.

The optical path description of the optical configuration not according to the invention in the case of bright "ON" state is.now described. When incoming unpolarized light hits the front linear polarizer 2, 3, the light is linearly polarized and then enters to the quarter wave retardation film. The quarter wave retardation film converts the linear polarized light into elliptically polarized light having opposite polarity to the chiral nematic material. Half of the light is absorbed by the linear polarizer. After the front quarter wave retardation film, elliptically polarized light enters to the focal conic chiral nematic and is depolarised. This depolarised light passes through the rear quarter wave retardation film and the rear linear polarizer. After the rear linear polarizer, half of the light is blocked and the remaining polarization half becomes linear polarized. It is then reflected by the mirror 9 and re-enters the rear linear polarizer 7, 8 and the rear quarter wave retardation film without any intensity attenuation. Then it becomes elliptically polarized after the rear quarter wave retardation film and re-enters to the focal conic chiral nematic. The elliptically polarized light is then depolarised. This depolarised light will be polarized after passing through the front polarizer and the intensity is halved again. This polarized/depolarised/polarized/reffected/depolarised/polarized optical path is independent of the wavelength and the reflected light at the viewer consist of full spectrum white and the intensity is 12.5% of the original incoming light.

In the case of dark "OFF" state, the mechanism of the light through the front elliptical polarizer is the same as in the "ON" state. Elliptically polarized light of opposite polarity to the chiral nematic material enters into the intermediate chiral nematic material. In the planar state, this elliptically polarized light will transmit through the chiral nematic material without any change in polarization and intensity. This polarized light will enter to the rear elliptical polarizer (of opposite polarity) and is then completely absorbed. No light will enter to the reflector and therefore no light escapes to the viewer. This polarized/transmission/absorption optical path gives a dark state and zero reflectance to the viewer. The contrast of black-and-white in this comparative optical configuration not according to the invention is very high, and theoretically infinite contrast ratio.

In Figure 2, the optical configuration according to the invention is described. The black-and-white chiral nematic display is made up by any chiral nematic display of any reflection spectrum and any elliptical polarization. Chiral nematic material selectively reflects and transmits light of certain elliptical (in particular, circular) polarizations. The angle between the front linear polarizer and the front quarter wave retardation film is optimised so that linear polarized light is converted into elliptically polarized light corresponding to that of the chiral nematic materials. The same is also achieved for the rear linear polarizer and the rear quarter wave retardation film. The front and rear elliptically polarized light are adjusted to be of opposite handedness as the chiral nematic material.

The optical bright "ON" state of the configuration given by Figure 2 is when the chiral nematic material is in the planar state and the optical dark "OFF" state is when the chiral nematic material is in the focal conic state.

The optical path description in the case of bright "ON" state is now described. When incoming unpolarized light hits the front linear polarizer 2, 3 the outgoing light is linearly polarized and then enters to the quarter wave retardation film 5. The quarter wave retardation film converts the linear polarized light into elliptically polarized light having opposite polarity to the chiral nematic material. In the planar state, this elliptically polarized light will transmit through the chiral nematic material without any change in the polarization and intensity. This polarized light will enter to the rear elliptical polarizer (of same polarity), and exits as linear polarized light which when reflected will re-enter into linear polarizer of the rear elliptical polarizer without intensity attenuation. This light then exits the rear elliptical polarizer and passes through the planar state chiral nematic material of opposite polarity and the front elliptical polarizer of same polarity without any further change of polarization and intensity. The entire optical path is independent of wavelength and the outgoing light is white with intensity 50% as the original incoming light.

In the case of dark "OFF" state, the mechanism of the front linear polarizer and front quarter wave retardation film is the same as the "ON" state. Half of the light is absorbed by the front linear polarizer. The elliptically polarized light entering into the focal conic chiral nematic material is depolarised. This depolarised light passes through the rear quarter wave retardation film and the rear linear polarizer. At the rear linear polarizer, half of the light is absorbed and the other half is linear polarized. It is then reflected by the mirror and re-enter into the rear linear polarizer and the rear quarter wave retardation film and becomes elliptically polarized. This elliptically polarized light re-enters the focal conic chiral nematic and is depolarised again. This depolarized light is then polarized again by the front polarizer. This polarized/depolarized/polarized/reflected/depolarized/polarized optical path is independent of the wavelength and the outgoing light at the viewer has intensity 12.5% as the original incoming light, resulting in the dark state.

In the invented optical mode configuration, planar structure and focal conic structure can co-exist, that is, some area within the chiral nematic material is planar and some is focal conic. Different grey scales are achieved by different ratios of domains at planar structure and focal conic structure of the chiral nematic materials. Full "ON" and full "OFF", different ratios of planar and focal conic structures can be controlled by any chiral nematic driving schemes. For example, these optical modes are applicable in the prior art driving schemes such as amplitude modulation, pulse width modulation, 3-phase dynamic driving, 5-phase dynamic driving, cumulative driving, dual frequency driving and multiple driving.

Other examples of suitable driving schemes are active matrix, passive matrix, grey scale, cumulative 2-phase, unipolar and multiple selection driving schemes.

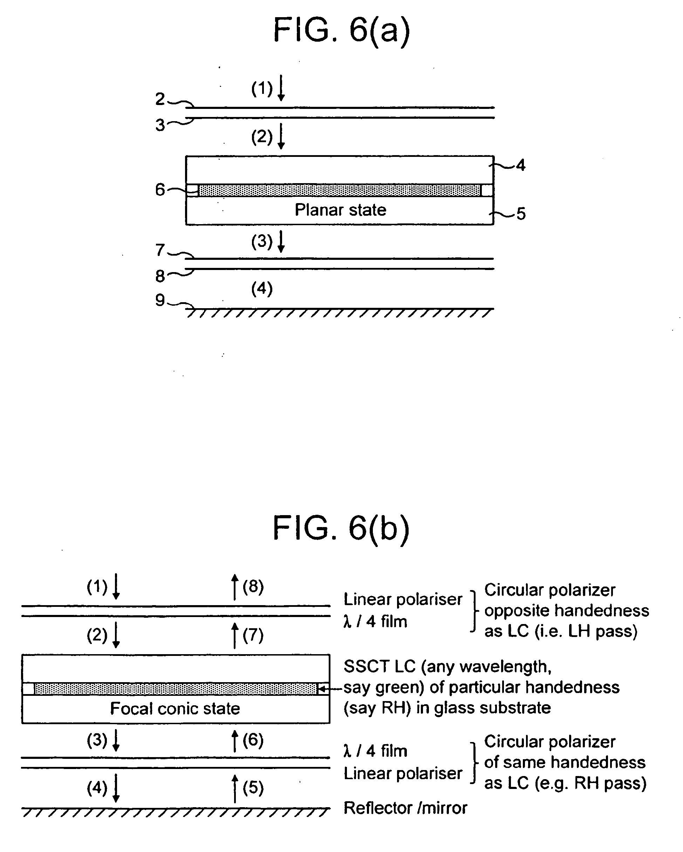

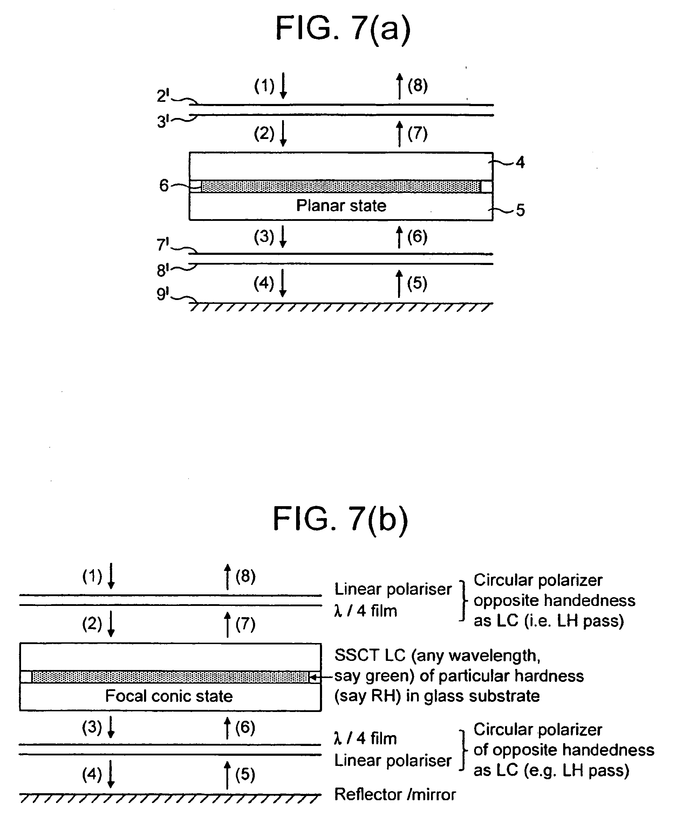

Examples of the light paths in displays not according to and according to the invention are set out in Figures 6 and 7, respectively. Figure 6a and 6b show light paths in states (1) to (4) in displays not according to the invention. Figure 6a illustrates the light path for the planar state, further details of which are given in the Table below (Table I).

**TABLE I**

| **Planar State mode** | | |
|---|---|---|
| Light Path | Light component | Comments |
| (1) | (100%) Unpolarised light RGB | White Light source |
| (2) | (50%) LH RGB | All RH light is cut |
| (3) | (50%) LH RGB | The LH light passes unaffected through the Planar state |
| (4) | (0%) No Light | All light of opposite polarity is cut. Therefore no light reaches mirror to reflect back to viewer |

Figure 6 illustrates the light path in stages (1) to (8) for the focal conic state, further details of which are given in the Table below (Table II).

**TABLE II**

| **Focal Conic State mode** | | |
|---|---|---|
| Light Path | Light component | Comments |
| (1) | (100%) Unpolarised light RGB | White Light source |
| (2) | (50%) LH RGB | All RH light is cut |
| (3) | (50%) De-polarised RGB | Scattering from the Focal Conic state affects all wavelengths |
| (4) | (25%) Linear polarised RGB | Half of the light of opposite polarity to the RH CP is cut on exiting the linear polariser side of the RH CP |
| (5) | (25%) Linear polarised RGB | Linear Polarisation of the light remains unchanged on reflection |
| (6) | (25%) RH RGB | The light becomes RH circularly polarised as it exits the CP on the retarder film side |
| (7) | (25%) De-Polarised RGB | Scattering from Focal Conic state depolarises light again |
| (8) | (12.5%) Linear polarised RGB. | Half of the light of opposite polarity to the RH CP is cut on passing through the RH CP. The light is linear on exiting from the LP side |

Figures 7a and 7b illustrate the light path in displays of the optical configuration according to the invention. Figure 7a illustrates the light path for the planar state mode, stages (1) to (8). Further details of the light path set out in the Table below (Table III).

**TABLE III**

| **Planar State mode** | | |
|---|---|---|
| Light Path | Light component | Comments |
| (1) | (100%) Unpolarised light RGB | White Light source |
| (2) | (50%) LH RGB | All RH light is cut |
| (3) | (50%) LH RGB | The LH light passes unaffected through the Planar state |
| (4) | (50%) Linear Polarised RGB | The LH light is allowed to pass through the LH polariser but is linear as it exits from the linear polariser side of the film |
| (5) | (50%) Linear polarised RGB | Linear Polarisation of the light remains unchanged on reflection |
| (6) | (50%) LH RGB | The light becomes LH circularly polarised as it exits the CP on the retarder film side |
| (7) | (50%) LH RGB | The LH light is again unchanged by passing the RH SSCT of Planar state |
| (8) | (50%) Linear Polarised RGB | The LH light exits the LH CP film on the linear Polariser side with linear polarisation |

Figure 7b illustrates the light path of the focal conic state mode stages (1) to (8).

The light path for the focal conic state mode is set out in the steps 1 to 8 in the Table below (Table IV).

**TABLE IV**

| **Focal Conic State Mode** | | |
|---|---|---|
| Light Path | Light component | Comments |
| (I) | (100%) Unpolarised light RGB | White Light source |
| (2) | (50%) LH RGB | All RH light is cut |
| (3) | (50%) De-polarised RGB | Scattering from the Focal Conic state affects all wavelengths |
| (4) | (25%) Linear polarised RGB | Half of the light of opposite polarity to the RH CP is cut on exiting the linear polariser side of the RH CP |
| (5) | (25%) Linear polarised RGB | Linear Polarisation of the light remains unchanged on reflection |
| (6) | (25%) RH RGB | The light becomes RH circularly polarised as it exits the CP on the retarder film side |
| (7) | (25%) De-Polarised RGB | Scattering from Focal Conic state depolarises light again |
| (8) | (12.5%) Linear polarised RGB | Half of the light of opposite polarity to the RH CP is cut on passing through the RH CP. The light is linear on exiting from the LP side |

## Claims

1. A black-and-white reflective chiral nematic display device, comprising a display panel (1) with a chiral nematic liquid crystal material (6) arranged between two transparent substrates (4, 5), each with a conductive electrode attached thereon, the chiral nematic liquid crystal material (6) exhibiting a controllable planar texture structure and a controllable focal conic texture structure, said display device further comprising two elliptical polarizers (2', 3', 7', 8') and an optical reflector (9'), said display panel (1) being arranged between said elliptical polarisers (2', 3', 7, 8'), **characterised in that** both elliptical polarisers are arranged to exhibit a handedness opposite to the handedness of the chiral nematic liquid crystal material (6).

2. A display device according to Claim 1, **characterised in that** the display device is arranged to display an optically bright "ON" state when the chiral nematic liquid crystal material (6) is in its planar texture structure.

3. A display device according to Claim 1 or 2, **characterised in that** the display device is arranged to display an optically dark "OFF" state when the chiral nematic liquid crystal material is in its focal conic texture structure.

4. A display device according to any of Claims 1 to 3, **characterised in that** the chiral nematic liquid crystal material (6) in its planar texture structure has a reflection spectrum with a peak at a characteristic wavelength and **in that** the display device is arranged such that a light is elliptically polarized after having pass the chiral nematic liquid crystal material in its planar texture structure.

5. A display device according to any of Claims 1 to 4, **characterised by** the reflector (9') being laminated on the one of said elliptical polarisers (7', 8') which is disposed at a rear side of the display panel (1).

6. A display device according to any of Claims 1 to 5, **characterised by** the arrangement of said elliptical polarisers being such that a light entering the chrial nematic liquid crystal material (6) from either side of said substrates is elliptically polarized.

7. A display device according to any of Claims 1 to 6, **characterised by** the arrangement of the one (7',8') of said elliptical polarisers which is disposed at a rear side of the display panel (1) being such that a light incident on the reflector (9') is linearly polarized.

8. A display device according to any of Claims 1 to 7, **characterised by** the reflector (9') being diffusive.

9. A display device according to any of Claims 1 to 8, **characterised in that** the display device is arranged to display an optically bright "ON" state being caused by maintaining an elliptical polarization of a light with a handedness of its elliptical polarization opposite to the one of the chiral nematic liquid crystal material (6) along the subsequent optical path of said light after the first time passing through the one elliptical polarizer (2', 3') disposed at a front side of the display panel (1) when the chiral nematic liquid crystal material (6) is in its planar texture structure.

10. A display device according to Claim 9, **characterised in that** the arrangement is such that in the optically bright "ON" state the entire optical path of said light is independent of the light wavelength.

11. A display device according to any of Claims 1 to 10, **characterised in that** the display device is arranged to display an optically dark "OFF" state being a result of the depolarisation of a light in the focal conic texture structure of the chiral nematic liquid crystal material (6).

12. A display device according to Claim 11, **characterised in that** the depolarisation of said light is independent of the light wavelength.

13. A display device according to any preceding claim, **characterised by** the transparent substrates (4, 5) having properties such that the polarization of the light passing through it is not affected.

14. A display device according to any preceding claim, **characterised by** further comprising a colour filter.

15. A display device according to any preceding claim, **characterised by** the display device being arranged to display different tones of grey scale wherein the planar texture structure and the focal conic texture structure coexist within a pixel area.

16. A display device according to Claim 15, **characterised in** the display device is arranged such that an area ratio of domains with a planar texture structure and domains with a focal conic texture structure of the chiral nematic liquid crystal material (6) is variable in a local area in order to display said different tones of grey scale within said local area.

17. A display device according to any of Claims 5 to 16, **characterised by** the two elliptical polarisers being wideband.

18. A display device according to any preceding claim, **characterised by** having a driving scheme for the chiral nematic liquid crystal material.

## Patentansprüche

1. Schwarz und weißes reflektives chirales nematisches Anzeiggerät, umfassend eine Anzeigetafel (1) mit einem chiralen nematischen Flüssigkristallmaterial (6), das zwischen zwei transparenten Substraten (4, 5) angeordnet ist, wobei an jedem eine leitfähige Elektrode befestigt ist, wobei das chirale nematische Flüssigkristallmaterial (6) eine regulierbare planare Texturstruktur und eine regulierbare fokale kegelförmige Texturstruktur aufweist, wobei das Anzeigegerät des Weiteren zwei elliptische Polarisatoren (2', 3', 7', 8') und einen optischen Reflektor (9') umfasst, wobei die Anzeigetafel (1) zwischen den elliptischen Polarisatoren (2', 3', 7', 8') angeordnet ist, **dadurch gekennzeichnet, dass** beide elliptischen Polarisatoren so angeordnet sind, dass sie einen Drehsinn entgegengesetzt dem Drehsinn des chiralen nematischen Flüssigkristallmaterials (6) aufweisen.

2. Anzeigegerät nach Anspruch 1, **dadurch gekennzeichnet, dass** das Anzeigegerät so angeordnet ist, dass es einen optisch hellen "AN"-Zustand anzeigt, wenn das chirale nematische Flüssigkristallmaterial (6) in seiner planaren Texturstruktur vorliegt.

3. Anzeigegerät nach Anspruch 1 oder 2, **dadurch gekennzeichnet, dass** das Anzeigegerät so angeordnet ist, dass es einen optisch dunklen "AUS"-Zustand anzeigt, wenn das chirale nematische Flüssigkristallmaterial in seiner fokalen kegelförmigen Texturstruktur vorliegt.

4. Anzeigegerät nach einem der Ansprüche 1 bis 3, **dadurch gekennzeichnet, dass** das chirale nematische Flüssigkristallmaterial (6) in seiner planaren Struktur ein Reflexionsspektrum mit einem Peak bei einer charakteristischen Wellenlänge aufweist und dass das Anzeigegerät so angeordnet ist, dass ein Licht elliptisch polarisiert wird, nachdem es durch das chirale nematische Flüssigkristallmaterial in seiner planaren Texturstruktur hindurchgegangen ist.

5. Anzeigegerät nach einem der Ansprüche 1 bis 4, **dadurch gekennzeichnet, dass** der Reflektor (9') auf den einen der elliptischen Polarisatoren (7', 8') auflaminiert ist, der auf der Rückseite der Anzeigeplatte (1) angebracht ist.

6. Anzeigegerät nach einem der Ansprüche 1 bis 5, **dadurch gekennzeichnet, dass** die Anordnung der elliptischen Polarisatoren derart ist, dass ein Licht, das in das chirale nematische Flüssigkristallmaterial (6) von einer der Seiten der Substrate her eintritt, elliptisch polarisiert wird.

7. Anzeigegerät nach einem der Ansprüche 1 bis 6, **dadurch gekennzeichnet, dass** die Anordnung des einen (7', 8') der elliptischen Polarisatoren, der auf der Rückseite der Anzeigetafel (1) angebracht ist, derart ist, dass ein Licht, das auf den Reflektor (9') auffällt, linear polarisiert wird.

8. Anzeigegerät nach einem der Ansprüche 1 bis 7, **dadurch gekennzeichnet, dass** der Reflektor (9') diffusiv ist.

9. Anzeigegerät nach einem der Ansprüche 1 bis 8, **dadurch gekennzeichnet, dass** das Anzeigegerät so angeordnet ist, dass es einen optisch hellen "AN"-Zustand anzeigt, der durch das Aufrechterhalten einer elliptischen Polarisation eines Lichts mit einem Drehsinn seiner elliptischen Polarisation verursacht wird, die derjenigen des einen chiralen nematischen Flüssigkristallmaterials (6) dem darauffolgenden optischen Weg des Lichts entlang entgegengesetzt ist, nachdem des zum erstenmal durch einen elliptischen Polarisator (2', 3') hindurchgegangen ist, der auf einer Vorderseite der Anzeigetafel (1) angebracht ist, wenn das chirale nematische Flüssigkristallmaterial (6) in seiner planaren Texturstruktur vorliegt.

10. Anzeigegerät nach Anspruch 9, **dadurch gekennzeichnet, dass** die Anordnung derart ist, dass im optisch hellen "AN"-Zustand der gesamte optische Weg des Lichts von der Lichtwellenlänge unabhängig ist.

11. Anzeigegerät nach einem der Ansprüche 1 bis 10, **dadurch gekennzeichnet, dass** das Anzeigegerät so angeordnet ist, dass es einen optisch dunklen "AUS"-Zustand anzeigt, der eine Folge der Depolarisation eines Lichts in der fokalen kegelförmigen Texturstruktur des chiralen nematischen Flüssigkristallmaterials (6) ist.

12. Anzeigegerät nach Anspruch 11, **dadurch gekennzeichnet, dass** die Depolarisation des Lichts unabhängig von der Lichtwellenlänge ist.

13. Anzeigegerät nach einem der vorhergehenden Ansprüche, **dadurch gekennzeichnet, dass** die transparenten Substrate (4,5) derartige Eigenschaften aufweisen, dass die Polarisation des Lichts, das durch diese hindurchgeht, nicht beeinflusst wird.

14. Anzeigegerät nach einem der vorhergehenden Ansprüche, **dadurch gekennzeichnet, dass** es des Weiteren einen Farbfilm umfasst.

15. Anzeigegerät nach einem der vorhergehenden Ansprüche, **dadurch gekennzeichnet, dass** das Anzeigegerät so angeordnet ist, dass es verschiedene Töne der Grauskala anzeigt, wobei die planare Texturstruktur und die fokale kegelförmige Texturstruktur innerhalb eines Pixelbereichs koexistieren.

16. Anzeigegerät nach Anspruch 15, **dadurch gekennzeichnet, dass** das Anzeigegerät derart angeordnet ist, dass ein Bereichsverhältnis von Domänen mit einer planaren Texturstruktur und Domänen mit einer fokalen kegelförmigen Texturstruktur des chiralen nematischen Flüssigkristallmaterials (6) in einem lokalen Bereich variabel ist, um die verschiedenen Töne der Grauskala innerhalb des lokalen Bereichs anzuzeigen.

17. Anzeigegerät nach einem der Ansprüche 5 bis 16, **dadurch gekennzeichnet, dass** die beiden elliptischen Polarisatoren vom Breitbandtyp sind.

18. Anzeigegerät nach einem der vorhergehenden Ansprüche, **dadurch gekennzeichnet, dass** es ein Treibschema für das chirale nematische Flüssigkristallmaterial (6) aufweist.

## Revendications

1. Dispositif d'affichage nématique chiral réfléchissant noir et blanc, comprenant un panneau d'affichage (1) avec un matériau de cristal liquide nématique chiral (6) qui est agencé entre deux substrats transparents (4, 5), chacun étant muni d'une électrode conductrice fixée dessus, le matériau de cristal liquide nématique chiral (6) présentant une structure de texture plane contrôlable et une structure de texture conique focale contrôlable, ledit dispositif d'affichage comprenant en outre deux polariseurs elliptiques (2', 3', 7', 8') et un réflecteur optique (9'), ledit panneau d'affichage (1) étant agencé entre lesdits polariseurs elliptiques (2', 3', 7', 8'), **caractérisé en ce que** les deux polariseurs elliptiques sont agencés de manière à présenter un sens de rotation opposé au sens de rotation du matériau de cristal liquide nématique chiral (6).

2. Dispositif d'affichage selon la revendication 1, **caractérisé en ce que** le dispositif d'affichage est agencé pour afficher un état "d'activation" lumineux optiquement lorsque le matériau de cristal liquide nématique chiral (6) est selon sa structure de texture plane.

3. Dispositif d'affichage selon la revendication 1 ou 2, **caractérisé en ce que** le dispositif d'affichage est agencé pour afficher un état de "désactivation" sombre optiquement lorsque le matériau de cristal liquide nématique chiral est selon sa structure de texture conique focale.

4. Dispositif d'affichage selon l'une quelconque des revendications 1 à 3, **caractérisé en ce que** le matériau de cristal liquide nématique chiral (6) selon sa structure de texture plane présente un spectre de réflexion avec une crête à une longueur d'onde caractéristique et **en ce que** le dispositif d'affichage est agencé de telle sorte qu'une lumière soit polarisée elliptiquement après être passée au travers du matériau de cristal liquide nématique chiral selon sa structure de texture plane.

5. Dispositif d'affichage selon l'une quelconque des revendications 1 à 4, **caractérisé en ce que** le réflecteur (9') est empilé sur celui desdits polariseurs elliptiques (7', 8') qui est disposé au niveau d'un côté arrière du panneau d'affichage (1).

6. Dispositif d'affichage selon l'une quelconque des revendications 1 à 5, **caractérisé en ce que** l'agencement desdits polariseurs elliptiques est tel qu'une lumière qui entre dans le matériau de cristal liquide nématique chiral (6) depuis l'un ou l'autre côté desdits substrats est polarisée elliptiquement.

7. Dispositif d'affichage selon l'une quelconque des revendications 1 à 6, **caractérisé en ce que** l'agencement de celui (7', 8') desdits polariseurs elliptiques qui est disposé au niveau d'un côté arrière du panneau d'affichage (1) est tel qu'une lumière incidente sur le réflecteur (9') est polarisée linéairement.

8. Dispositif d'affichage selon l'une quelconque des revendications 1 à 7, **caractérisé en ce que** le réflecteur (9') est diffusant.

9. Dispositif d'affichage selon l'une quelconque des revendications 1 à 8, **caractérisé en ce que** le dispositif d'affichage est agencé de manière à afficher un état "d'activation" lumineux optiquement qui est généré par le maintien d'une polarisation elliptique d'une lumière moyennant un sens de rotation de sa polarisation elliptique opposé à celui du matériau de cristal liquide nématique chiral (6) le long du chemin optique suivant de ladite lumière après le passage la première fois au travers de celui des polariseurs elliptiques (2', 3') qui est disposé au niveau d'un côté avant du panneau d'affichage (1) lorsque le matériau de cristal liquide nématique chiral (6) est selon sa structure de texture plane.

10. Dispositif d'affichage selon la revendication 9, **caractérisé en ce que** l'agencement est tel que selon l'état "d'activation" lumineux optiquement, la totalité du chemin optique de ladite lumière est indépendante de la longueur d'onde de lumière.

11. Dispositif d'affichage selon l'une quelconque des revendications 1 à 10, **caractérisé en ce que** le dispositif d'affichage est agencé de manière à afficher un état de "désactivation" sombre optiquement qui est un résultat de la dépolarisation d'une lumière selon la structure de texture conique focale du matériau de cristal liquide nématique chiral (6).

12. Dispositif d'affichage selon la revendication 11, **caractérisé en ce que** la dépolarisation de ladite lumière est indépendante de la longueur d'onde de lumière.

13. Dispositif d'affichage selon l'une quelconque des revendications précédentes, **caractérisé en ce que** les substrats transparents (4, 5) présentent des propriétés qui sont telles que la polarisation de la lumière qui passe au travers n'est pas affectée.

14. Dispositif d'affichage selon l'une quelconque des revendications précédentes, **caractérisé en ce qu'**il comprend en outre un filtre couleur.

15. Dispositif d'affichage selon l'une quelconque des revendications précédentes, **caractérisé en ce que** le dispositif d'affichage est agencé de manière à afficher des teintes différentes d'échelle de gris où la structure de texture plane et la structure de texture conique focale coexistent à l'intérieur d'une aire de pixel.

16. Dispositif d'affichage selon la revendication 15, **caractérisé en ce que** le dispositif d'affichage est agencé de telle sorte qu'un ratio d'aires de domaines avec une structure de texture plane et de domaines avec une structure de texture conique focale du matériau de cristal liquide nématique chiral (6) est variable au niveau d'une aire locale afin d'afficher lesdites teintes différentes d'échelle de gris à l'intérieur de ladite aire locale.

17. Dispositif d'affichage selon l'une quelconque des revendications 5 à 16, **caractérisé en ce que** les deux polariseurs elliptiques sont large bande.

18. Dispositif d'affichage selon l'une quelconque des revendications précédentes, **caractérisé en ce qu'**il comporte un schéma de pilotage pour le matériau de cristal liquide nématique chiral.
